**Europäisches Patentamt**

**European Patent Office**

**Office européen des brevets**

(19)

(11) **EP 0 701 709 B1**

(12) **EUROPÄISCHE PATENTSCHRIFT**

(45) Veröffentlichungstag und Bekanntmachung des Hinweises auf die Patenterteilung:
**01.08.2001  Patentblatt 2001/31**

(51) Int Cl.⁷: **G02C 7/02**

(21) Anmeldenummer: **95913876.9**

(22) Anmeldetag: **30.03.1995**

(86) Internationale Anmeldenummer:
**PCT/DE95/00438**

(87) Internationale Veröffentlichungsnummer:
**WO 95/27229 (12.10.1995 Gazette 1995/43)**

(54) **SERIE PROGRESSIVER BRILLENGLÄSER**

SET OF PROGRESSIVE SPECTACLE LENSES

SERIE DE VERRES DE LUNETTES PROGRESSIFS

(84) Benannte Vertragsstaaten:
**AT CH DE ES FR GB IT LI NL SE**

(30) Priorität: **30.03.1994  DE 4411157**
              **29.10.1994  DE 4438506**

(43) Veröffentlichungstag der Anmeldung:
**20.03.1996  Patentblatt 1996/12**

(60) Teilanmeldung:
**99118534.9 / 0 969 309**

(73) Patentinhaber: **Optische Werke G. Rodenstock**
**80469 München (DE)**

(72) Erfinder:
• **ALTHEIMER, Helmut**
  **D-80469 München (DE)**
• **AWRATH, Norbert**
  **D-81539 München (DE)**
• **BARTH, Rudolf**
  **D-85256 Vierkirchen (DE)**
• **BAUMBACH, Peter**
  **D-81543 München (DE)**
• **BROSIG, Jochen**
  **D-82031 Grünwald (DE)**
• **ESSER, Gregor**
  **D-85540 Haar (DE)**
• **FÜSS, Monika**
  **D-80337 München (DE)**
• **GUILINO, Günther**
  **D-81476 München (DE)**
• **HAIMERL, Walter**
  **D-80337 München (DE)**
• **MEIXNER, Christine**
  **D-80634 München (DE)**
• **PFEIFFER, Herbert**
  **D-81247 München (DE)**
• **ROHRBACH, Manfred**
  **D-85241 Hebertshausen (DE)**

(74) Vertreter: **Münich, Wilhelm, Dr. et al**
**Dr. Münich & Kollegen**
**Anwaltskanzlei**
**Wilhelm-Mayr-Strasse 11**
**80689 München (DE)**

(56) Entgegenhaltungen:
**EP-A- 0 039 497      EP-A- 0 295 849**
**EP-A- 0 384 128      US-A- 2 878 721**

## Beschreibung

### Technisches Gebiet

Die Erfindung bezieht sich auf eine Serie progressiver Brillengläser gemäß dem Oberbegriff des Patentanspruchs 1.

### Stand der Technik

Brillengläser der im Oberbegriff des Patentanspruchs 1 vorausgesetzten Art weisen (in der Regel) eine Vorderfläche mit kontinuierlich variierendem Flächenbrechwert (progressive Fläche) auf, der von dem jeweiligen zum Sehen in die Ferne geeigneten Wert BK [dpt] im Punkt mit den (im Rahmen dieser Anmeldung gewählten) Koordinaten x=0mm, y=8mm (Fernbezugspunkt) im unteren Bereich des Fernteils längs einer gewundenen Linie (Hauptlinie), die in etwa mit der Hauptblicklinie bei Blicksenkung, d.h. dem Durchstoßpunkt des Sehstrahls bei Blicksenkung durch die Fläche mit kontinuierlich variierendem Brechwert, zusammenfällt, auf einen zum Sehen in die Nähe geeigneten Wert im oberen Bereich des Nahteils ansteigt, der - im Nahbezugspunkt - um den Wert Add [dpt] der Addition höher als der Flächenbrechwert BK im unteren Bereich des Fernteils ist. Die augenseitige Fläche ist sphärisch oder asphärisch bzw. bei astigmatischer Verordnung torisch oder atorisch gestaltet.

Die Hersteller von progressiven Brillengläsern müssen derartige progressive Brillengläser mit unterschiedlichem Flächenbrechwert im Fernbezugspunkt und/oder unterschiedliche Zunahmen des Flächenbrechwerts vom Fernteil zum Nahteil (i.f. als Addition Add bezeichnet) fertigen, um den unterschiedlichen Fehlsichtigkeiten bzw. den unterschiedlichen Graden der Alterssichtigkeit gerecht zu werden. Aufgrund unterschiedlicher Materialien (Silikatglas mit einem Brechungsindex von 1,525, hochbrechendes Silikatglas mit einem Brechungsindex von z.B. 1,6 oder 1,7 sowie Kunststoff) und einer Vielzahl von Basiskurven und Additionen (in der Regel von 0,5 dpt bis 3,5 oder 4 dpt in Abstufungen von typischerweise 0,25 dpt) ist es für ein "komplettes Programm" nötig, typischerweise wenigstens 100, in der Regel jedoch weit mehr, verschiedene Flächen zu berechnen und zu fertigen.

In der Vergangenheit sind derartige Brillengläser mit unterschiedlichem Flächenbrechwert im Fernteil und/oder unterschiedlicher Zunahme des Flächenbrechwerts vom Fernteil zum Nahteil dadurch berechnet worden, daß zunächst eine progressive Fläche mit einem bestimmten Flächenbrechwert und einer bestimmten Addition - auch als Nahzusatz bezeichnet - berechnet worden ist. Aus dieser Fläche sind dann durch ein Transformationsverfahren die weiteren für die Serie benötigten Flächen mit abweichender Addition bzw. abweichendem Flächenbrechwert abgeleitet worden. Hierzu wird u.a. auf die US-PS 2 878 721 verwiesen, in der dies ausdrücklich erwähnt ist. Auf diese Druckschrift sowie die DE-A-28 14 936 wird im übrigen zur Erläuterung aller hier nicht im einzelnen definierten Begriffe, wie Flächenbrechwert und Flächenastigmatismus ausdrücklich Bezug genommen.

Seit einiger Zeit werden progressive Flächen für jede Flächenbrechkraft im Fernbezugspunkt und jede Addition gesondert - beispielsweise mittels Splines - berechnet, also nicht durch Transformations-Verfahren aus einer sogenannten Mutterfläche abgeleitet.

Bei diesen Berechnungsverfahren wird oft mit "Zielfunktionen" gearbeitet, bei denen Flächeneigenschaften unter physiologischen Gesichtspunkten vorgegeben werden. Damit ist für die Berechnung die "vernünftige" Vorgabe von Flächeneigenschaften von entscheidender Bedeutung.

Erfindungsgemäß ist erkannt worden, daß durch zu weitgehende Forderungen beispielsweise bezüglich der Größe des Fernteils die Optimierung von anderen Flächeneigenschaften erschwert, wenn nicht sogar unmöglich gemacht wird. Für eine schnelle und wirtschaftliche Berechnung einer Vielzahl von progressiven Flächen ist also die Vorgabe von Flächeneigenschaften als Funktion der Basiskurve (Flächenbrechwert BK im Fernteil) und/oder der Addition von entscheidener Bedeutung.

### Darstellung der Erfindung

Der Erfindung liegt die Aufgabe zugrunde, Bemessungsregeln für physiologisch wesentliche Größen bei einem progressiven Brillenglas, wie beispielsweise die Begrenzung des Fernteils und/oder den Versatz der Hauptlinie, durch den diese dem Durchstoßpunkt des Sehstrahls durch die progressive Fläche bei einer Blicksenkung folgt, anzugeben, durch die diese Größen als Funktion des Brechwerts im Fernteil und/oder der Addition zumindest als Grenzwerte angegeben werden, so daß die Berechnung der einzelnen Flächen ohne großen Aufwand und ohne eine Änderung der "Zielfunktionen" möglich ist.

Eine erfindungsgemäße Lösung dieser Aufgabe ist im Patentanspruch 1 angegeben. Weiterbildungen der Erfindung sind Gegenstand der abhängigen Ansprüche.

Erfindungsgemäß gilt für die maximale Höhe y (in mm) der Linie, auf der der Flächenastigmatismus 0,5 dpt beträgt, und die damit den für deutliches Sehen geeigneten Bereich des Fernteils nach unten begrenzt, beidseits in einem Abstand von 25 mm von der Hauptlinie:

$$y = f(\text{Add}, \text{BK}) = b(\text{BK}) + a/(\text{Add}*1000)$$

$$b(\text{BK}) = a_o + a_1 *\text{BK} + a_2 *\text{BK}^2$$

Dabei sind die Koeffizienten auf der nasalen und der temporalen Seite der Hauptlinie wie folgt festgelegt:

|       | nasal                      | temporal                    |
|-------|----------------------------|-----------------------------|
| a     | $-8{,}5 \pm 20\%$          | $-7{,}5 \pm 20\%$           |
| $a_o$ | 18 ... 19 mm               | 19 ... 20 mm                |
| $a_1$ | $-3580 \pm 20\%$ mm$^2$    | $-4520 \pm 20\%$ mm$^2$     |
| $a_2$ | $390\,000 \pm 20\%$ mm$^3$ | $480\,000 \pm 20\%$ mm$^3$. |

In dem Bereich des Fernteils, der für deutliches Sehen geeignet ist, muß nämlich der Astigmatismus, der im unteren Bereich des Fernteils im wesentlichen durch den Flächenastigmatismus bestimmt wird, kleiner als 0,5 dpt sein, da ansonsten der Visus zu stark vermindert würde.

Bei bekannten Brillengläsern der im Oberbegriff des Patentanspruchs 1 vorausgesetzten Art werden - um die Optimierung anderer Größen, wie die Breite des Nahteils und/oder die Breite der Progressionszone zu erleichtern - Kompromisse hinsichtlich der Begrenzung des Fernteils im seitlichen unteren Bereich eingegangen, die - wie erfindungsgemäß erkannt worden ist - häufig für den Brillenträger die Komforteigenschaften des jeweiligen progressiven Brillenglases bestimmen, aber die nicht erforderlich sind:

Es hat sich nämlich herausgestellt, daß es möglich ist, die "0,5 dpt-Linie" des Flächenastigmatismus im seitlichen unteren Bereich des Fernteils "flacher" als beim Stand der Technik verlaufen zu lassen, ohne daß bei anderen Größen, wie der Breite der Progressionszone oder der Breite des Nahteils Kompromisse eingegangen werden zu müssen. Durch die erfindungsgemäße Bemessungsregel erhält man eine Bemessung der maximalen Fernteilgröße in der Regel über den gesamten, in jedem Falle jedoch über den normalen Wirkungs- und Additionsbereich, durch die "gerade noch nicht" Verschlechterungen der Glaseigenschaften in anderen Bereichen hervorgerufen werden. Unter normalem Wirkungsbereich wird der Bereich mit nicht zu großen Pluswirkungen verstanden.

Unter einer Serie von progressiven Brillengläsern wird im Rahmen der vorliegenden Erfindung ein Satz von wenigstens zwei progressiven Brillengläsern verstanden, die sich hinsichtlich ihres Brechwerts im Fernbezugspunkt und/oder ihrer Addition (Nahzusatz) unterscheiden. In der Regel weisen die progressiven Flächen der Brillengläser eines Satzes eine "topologische Ähnlichkeit" auf, das Bestehen einer topologischen Ähnlichkeit ist zwar eine bevorzugte Eigenschaft eines Satzes, jedoch keine unbedingte Notwendigkeit, damit wenigstens zwei Brillengläser einen "Satz" im Sinne dieser Erfindung bilden.

Bei einer bevorzugten, im Anspruch 2 angegebenen Weiterbildung der Erfindung sind die Toleranzen für die Koeffizienten a, $a_1$ und $a_2$ auf $\pm 5\%$ eingeschränkt. Ferner kann der Koeffizient $a_0$ auf der nasalen Seite der Wert 18 und auf der temporalen Seite den Wert 19,3 haben (Anspruch 3). Diese Wahl der Koeffizienten erlaubt eine verfeinerte Optimierung der progressiven Flächen mit unterschiedlicher Basiskurve und/oder Addition.

Im Anspruch 4 ist eine Weiterbildung gekennzeichnet, bei der die minimal bei der Optimierung erreichbare Breite dx des Nahteils in der Höhe des Nahbezugspunktes nur eine Funktion der Addition Add und überraschenderweise nicht des Flächenbrechwerts BK im Fernbezugspunkt ist. Dabei wird in Übereinstimmung mit den vorstehenden Darlegungen davon ausgegangen, daß der Nahteil durch die 0,5 dpt-Linie des Flächenastigmatismus der progressiven Fläche begrenzt ist.

Die Breite des Nahteils ist fast genauso wie die Größe des Fernteils eine bestimmende Größe für die Akzeptanz eines progressiven Brillenglases bei dem jeweiligen Benutzer. Ein breiter Nahteil ermöglicht es beispielsweise, mehrere Spalten einer Zeitung ohne Kopfbewegung zu überblicken.

Insbesondere gilt nach Anspruch 5 für die minimale Breite dx des Nahteils "in Höhe des Nahbezugspunktes":

$$dx = b' + a'/(\text{Add}*1000)$$

mit $a' = 14{,}6 \pm 20\%$
$b' = 5..7$ mm

Dabei wird unter Nahbezugspunkt in Übereinstimmung mit der üblichen Definition der Punkt auf der Hauptlinie verstanden, in dem der Flächenbrechwert derprogressiven Fläche den Wert (BK + Add) erreicht.

Bevorzugt für die Gestaltung der progressiven Fläche und insbesondere die Ausbildung des Nahteils ist es, wenn die Toleranz für den Koeffizienten a' $\pm$ 5% ist, und der Koeffizient b' den Wert 6 mm hat (Anspruch 6).

Bei einer weiteren Realisierung der Erfindung, die in. Anspruch 7 angegeben ist, gilt für den Versatz $x_0$ der Projektion der Hauptlinie in die x,y-Ebene:

$$x_0 = b'' + a'' - a'' / (1 + e^{c*(y+d)})$$

Dabei gilt für die Koeffizienten:

$$2 \leq a'' \leq 4,3 \text{ mm}$$

$$-0,03 \leq b'' \leq 0 \text{ mm}$$

$$-0,4 \leq c \leq -0,3 \text{ mm}^{-1}$$

$$4,5 \leq d \leq 5,1 \text{ mm}$$

Nach Anspruch 8 ist der Koeffizient a'' eine Funktion der Addition Add und des Flächenbrechwerts BK im Fernbezugspunkt.

Im Anspruch 9 ist angegeben, daß für den Koeffizienten a'' in der im Anspruch 7 angegebenen Beziehung gilt:

$$a'' = \alpha * ADD + \beta * BK + \Gamma$$

wobei für die Koeffizienten der im Anspruch 9 angegebenen Beziehung gilt:

$$100 \leq \beta \leq 300 \text{ mm}^2$$

$$Add \leq 2,5 \text{ dpt}$$

$$0 \leq \alpha \leq 200 \text{ mm}^2$$

$$1,3 \leq \Gamma \leq 2 \text{ mm}$$

$$Add > 2,5 \text{ dpt}$$

$$800 \leq \alpha \leq 1100 \text{ mm}^2$$

$$0,7 \leq \Gamma \leq 0 \text{ mm}$$

Bei der erfindungsgemäßen Serie von Brillengläsern kann die Hauptlinie eine Linie mit einem - wenn auch geringem - Flächenastigmatismus sein. Bevorzugt ist es jedoch, wenn die Hauptlinie keinen Flächenastigmatismus aufweist (Anspruch 10). Erfindungsgemäß ist nämlich erkannt worden, daß es im Gegensatz zu der Lehre der DE 30 16 935 C2 möglich ist, ein progressives Brillenglas mit großem Fernteil und großem Nahteil sowie einer breiten Progressionszone auch und sogar insbesondere dann zu realisieren, wenn die Hauptlinie (wenigstens) im Bereich -18mm < y ≤ 12mm eine sogenannte Nabellinie ist.

Weiterhin ist es erfindungsgemäß bevorzugt, wenn die Linien gleichen Flächenbrechwerts - anders als beim Stand der Technik - horizontal in die Hauptlinie einmünden. Hierdurch werden bei einer horizontalen Blickbewegung Schaukelerscheinungen etc. für den Brillenträger mit Sicherheit vermieden. Die horizontale Einmündung der Linien gleichen Flächenbrechwerts in die Hauptlinie erhält man durch die Vorgabe eines infinitesimalen Streifens höherer Ordnung beidseits der Hauptlinie; hierzu wird auf die DE-A-43 37 369 und insbesondere die dort gemachten Darlegungen zum Rechenverfahren verwiesen.

Als Folge der horizontalen Einmündung der Linien gleichen Flächenbrechwerts erhält man einen charkteristischen Verlauf der Horizontalradien-Differenz. Unter Horizontalradius wird der Radiuswert verstanden, den man durch den Schnitt der progressiven Fläche mit einer Horizontalebene y=const. erhält. Unter Horizontalradien-Differenz wird nun die Differenz des Horizontalradius auf der Hauptlinie im Punkt $x=x_o$, $y=y_o$ und dem Horizontalradius in einem Punkt $x=x_1$, $y=y_o$ der progressiven Fläche verstanden.

Durch die erfindungsgemäß erzwungene horizontale Einmündung der Linien gleichen Flächenbrechwerts ändert sich die Horizontalradien-Differenz im unteren Bereich des Fernteils, d.h. für y-Werte von 5 bis 10 mm in einem Streifen beidseits der Hauptlinie mit einer einseitigen Ausdehnung von etwa 3 bis 8 mm mit einem vergleichsweise großen Gradienten, während die Änderung außerhalb dieses Streifens einen wesentlich kleineren Gradienten aufweist. In der Progressionszone und im Nahteil ist dagegen in diesem Streifen beidseits der Hauptlinie der Gradient der Horizontalradien-Differenz vergleichsweise gering.

Bei progressiven Brillengläsern der im Oberbegriff des Patentanspruchs 1 vorausgesetzten Art ist die progressive Fläche, d.h. die Fläche mit sich kontinuierlich änderndem Flächenbrechwert, in der Regel, jedoch nicht notwendigerweise, die Vorderfläche.

Erfindungsgemäß ist nun erkannt worden, daß sich durch die Gestaltung der zweiten Fläche, die - entsprechend den vorstehenden Darlegungen - in der Regel die augenseitige Fläche ist - und insbesondere durch die Verwendung asphärischer augenseitiger Flächen wesentliche "kosmetische Vorteile" erzielen lassen:

Wählt man als augenseitige Fläche bei sphärischer Verordnung eine asphärische Fläche und bei torischer Verordnung eine atorische Fläche, so kann man die Basiskurve der progressiven Fläche, d.h. den Flächenbrechwert im Fernbezugspunkt 1 dpt bis 1,5 dpt "flacher" als bei sphärischer bzw. torischer augenseitiger Fläche wählen. Normalerweise würde man bei einer flacheren Basiskurve eine deutliche Verringerung des Visus und insbesondere eine wesentliche Einschränkung des für "deutliches Sehen" geeigneten Bereichs erhalten. Tatsächlich kann man jedoch durch die erfindungsgemäße Wahl aspärischer Flächen bei "flacherer Basiskurve" eine Ausweitung des für deutliches Sehen geeigneten Bereichs erhalten.

Dabei ist es bevorzugt, wenn das Design der atorischen Fläche in Abhängigkeit von der Achslage des Zylinders variiert. Dabei wird unter atorischer Fläche eine Fläche verstanden, die wenigstens einen asphärischen, also von der Kreisform abweichenden Hauptschnitt aufweist. Im Anspruch 14 ist gekennzeichnet, daß die Abweichung dz zwischen der Pfeilhöhe des oder der asphärischen Schnitte und eines Kreises mit einem Radius, der dem Scheitelradius der Asphäre entspricht, gegeben ist durch:

$$dz = a_j * r^2 + b_j * r^4$$

hierbei bedeuten

dz    die Abweichung in μm zwischen Scheitelkreis und Hauptschnitt

r    der Abstand vom Scheitel in mm, d.h. $r = (x^2+y^2)^{0,5}$

und daß für die Koeffizienten gilt:

$$|a_j| \le 2 * 10^{-4} \text{ mm}^{-1}$$

$$|b_j| \le 1 * 10^{-6} \text{ mm}^{-3}$$

wobei der Hauptschnitt mit der geringeren Scheitelkrümmung mit j=1 und der mit der größeren Scheitelkrümmung mit j=2 bezeichnet ist. Dabei können die Koeffizienten $a_j$ und $b_j$ durch folgende Funktionale gegeben sein:

$$a_j = f_{j1}(s,z) = a_{j1}(s) + b_{j1}(s) * zyl$$

$$b_j = f_{j2}(s,z) = a_{j2}(s) + b_{j2}(s) * zyl$$

hierbei bedeuten

s      die sphärische Wirkung im Fernbezugspunkt

zyl      die zylindrische Wirkung im Fernbezugspunkt in Minuszylinder-Schreibweise, und

daß die Koeffizienten $a_{j2}$ und $b_{j2}$ eine Funktion zweiter Ordnung von s sind.

Für die Koeffizienten $a_{ji}$ und $b_{ji}$ kann wiederum gelten:

$$|a_{j1}| \leq 5 * 10^{-5} \text{ mm}^{-1}$$

$$|b_{j1}| \leq 5 * 10^{-2}$$

$$|a_{j2}| \leq 4 * 10^{-7} \text{ mm}^{-3}$$

$$|b_{j2}| \leq 3 * 10^{-4} \text{ mm}^{-2}$$

Die Koeffizienten $a_{j2}$ und $b_{j2}$ können durch folgende Funktionale gegeben sein:

$$a_{j2} = a_{j21} + b_{j21} * s + c_{j21} * s^2$$

$$b_{j2} = a_{j22} + b_{j22} * s + c_{j22} * s^2$$

wobei für die Koeffizienten a, b und c gelten kann:

$$a_{j21} = 2{,}35 * 10^{-8} \text{ mm}^{-3} \pm 50 \%$$

$$b_{j21} = -1{,}7 * 10^{-5} \text{ mm}^{-2} \pm 50 \%$$

$$c_{j21} = -8 * 10^{-3} \text{ mm}^{-1} \pm 50 \%$$

Im Anspruch 20 sind Koeffizienten für die beiden Hauptschnitte angegeben, die in sehr einfacher Weise die Berechnung einer atorischen Rückfläche zu einer progressiven Vorderfläche gestatten.

$$a_{121} = 2{,}35 * 10^{-8} \text{ mm}^{-3} \pm 50 \%$$

$$b_{j21} = -1{,}7 * 10^{-5} \text{ mm}^{-2} \pm 50 \%$$

$$c_{j21} = -8 * 10^{-3} \text{ mm}^{-1} \pm 50 \%$$

$$a_{122} = 1{,}73 * 10^{-5} \text{ mm}^{-2} \pm 50\ \%$$

$$b_{122} = 3{,}22 * 10^{-2} \text{ mm}^{-1} \pm 50\ \%$$

$$c_{122} = -2{,}27 \pm 50\ \%$$

$$a_{222} = -2{,}76 * 10^{-5} \text{ mm}^{-2} \pm 50\ \%$$

$$b_{222} = -1{,}29 * 10^{-3} \text{ mm}^{-1} \pm 50\ \%$$

$$c_{222} = -0{,}172 \pm 50\ \%$$

## Kurze Beschreibung der Zeichnung

Die Erfindung wird nachstehend an Hand von Ausführungsbeispielen unter Bezugnahme auf die Zeichnung näher beschrieben, in der zeigen:

Fig. 1a bis 1c   die Linien gleichen Flächenastigmatismus für Brillengläser mit dem Flächenbrechwert 4 dpt im Fernbezugspunkt und unterschiedlicher Addition (1dpt bis 3 dpt),

Fig. 2a bis 2c   die Linien gleichen Flächenastigmatismus für Brillengläser mit dem Flächenbrechwert 5 dpt im Fernbezugspunkt und unterschiedlicher Addition,

Fig. 3a bis 3c   die Linien gleichen Flächenastigmatismus für Brillengläser mit dem Flächenbrechwert 6,5 dpt im Fernbezugspunkt und unterschiedlicher Addition,

Fig. 4a   die Projektion der Hauptlinie in die x,y-Ebene für Hauptlinien mit unterschiedlicher Addition und einem Flächenbrechwert 5dpt im Fernbezugspunkt zur Erläuterung des sog. $x_0$-Versatzes,

Fig. 4b   den mittleren Flächenbrechwert für diese Hauptlinien,

Fig. 4c   den Winkel $\delta_o(y)$, d.h. die Steigung der Horizontalschnitte an diesen Hauptlinien,

Fig. 5   die Horizontalradiendifferenz für ein Brillenglas mit der Basiskurve 5 und der Addition 2 für verschiedene Werte von y,

Fig. 6a bis 6d   die Abweichungen von atorischen Flächen von entsprechenden torischen Flächen, und

Fig. 7a und 7b   die Iso-Visus-Linien für ein progressives Brillenglas mit atorischer augenseitiger Fläche bzw. torischer augenseitiger Fläche.

## Darstellung von Ausführungsbeispielen

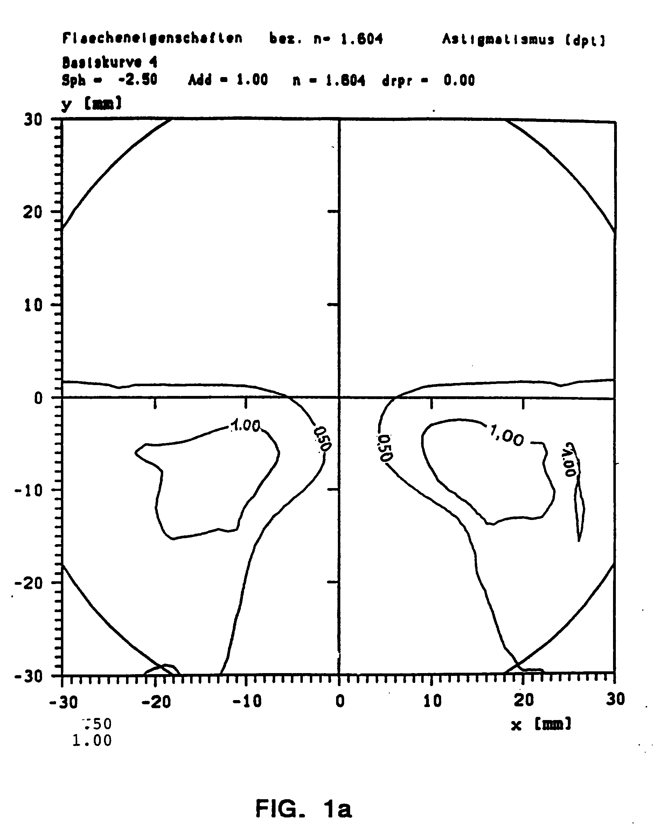

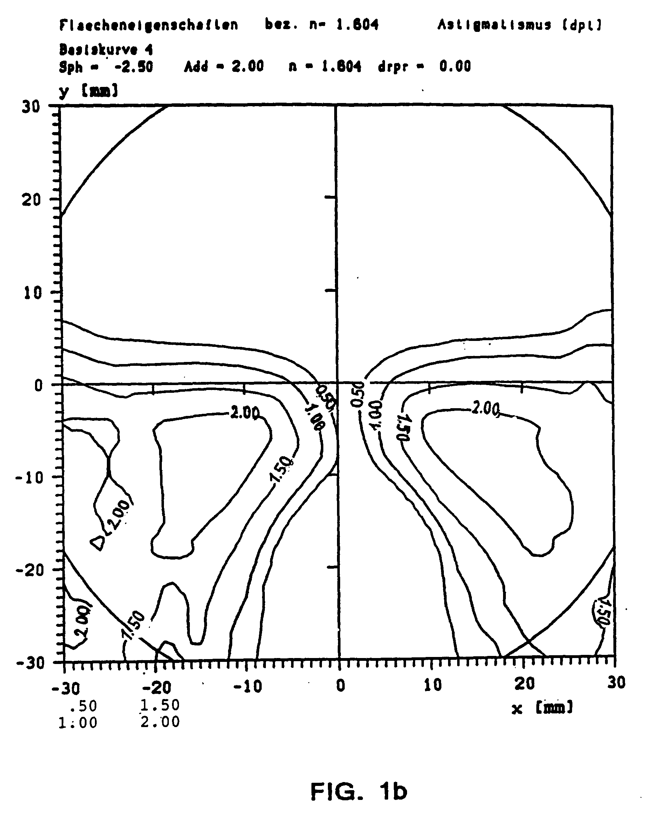

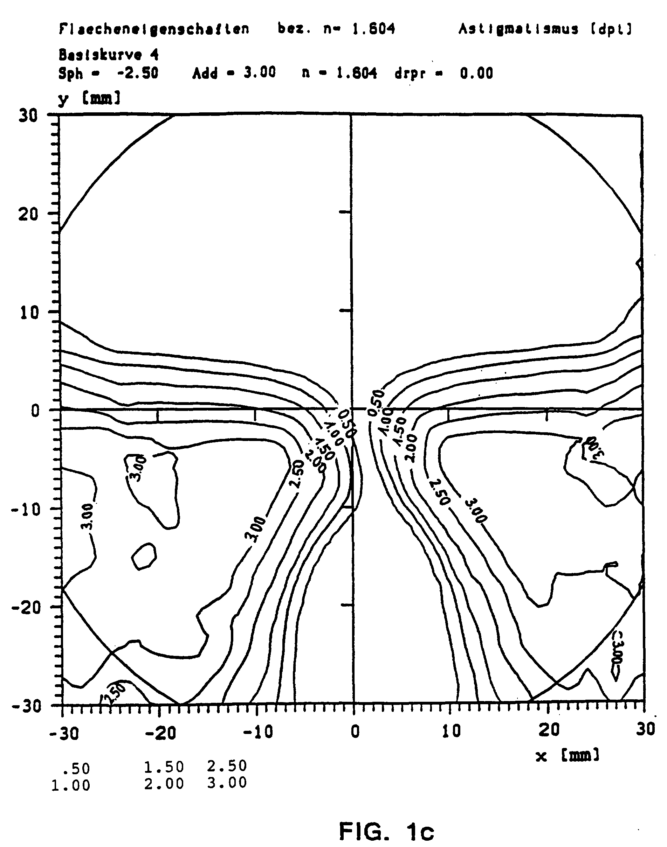

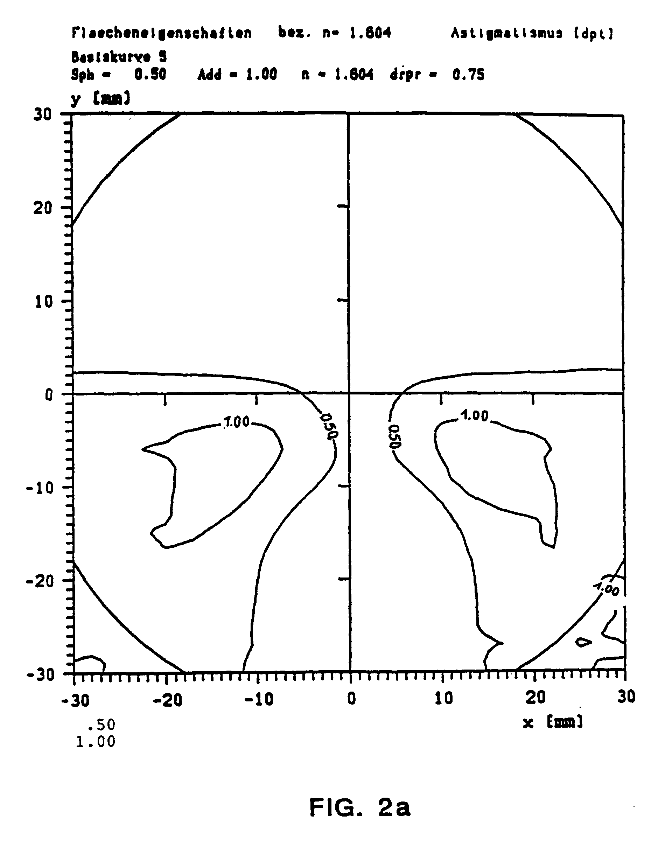

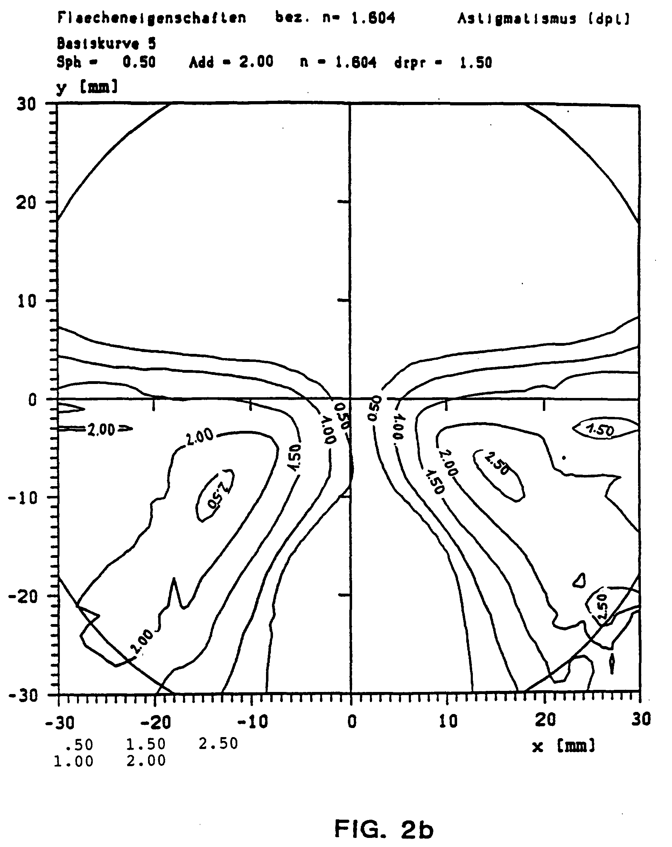

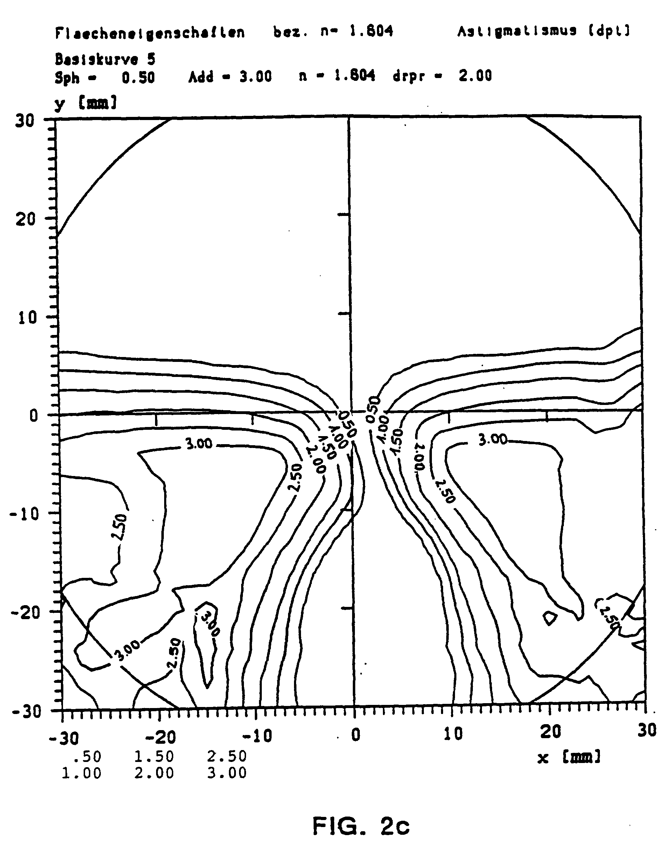

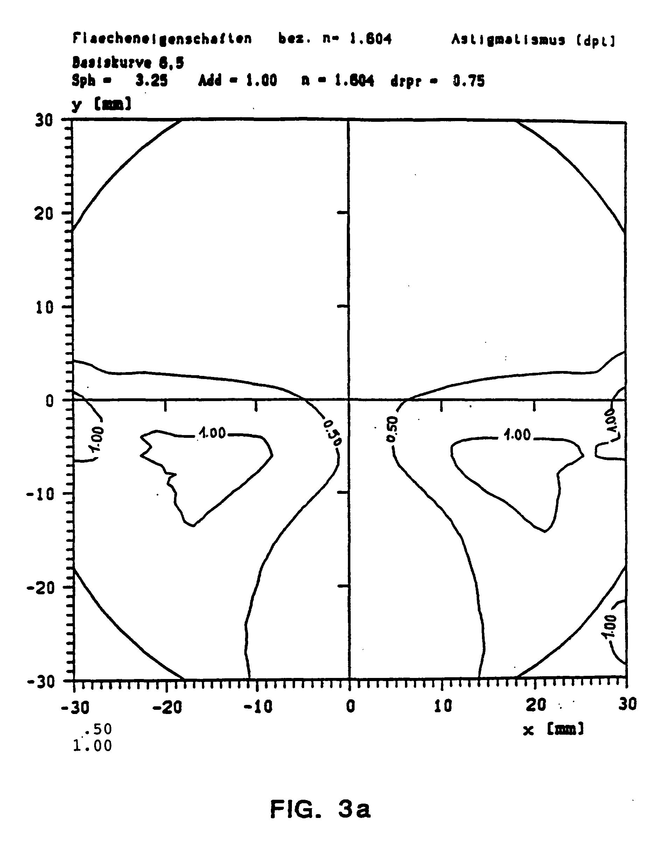

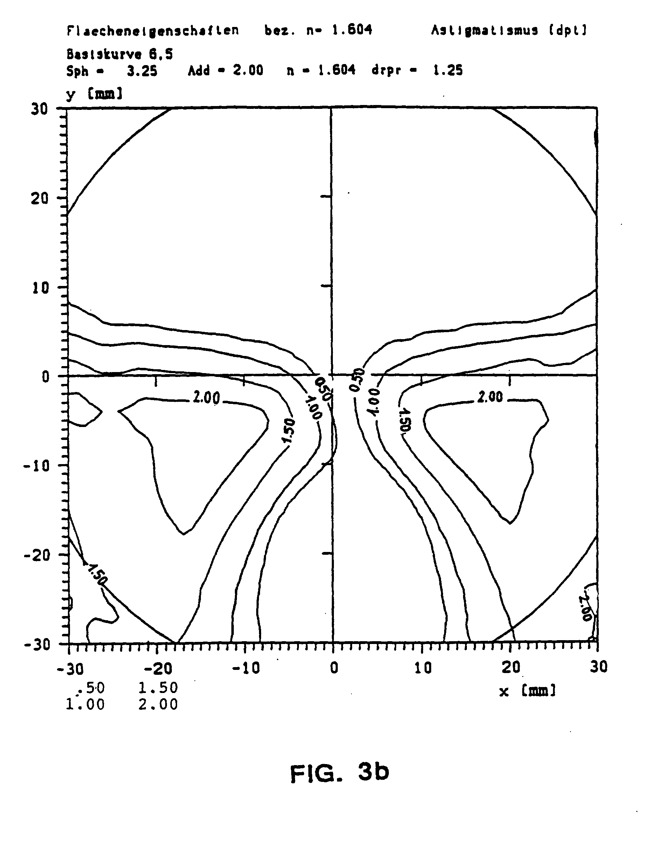

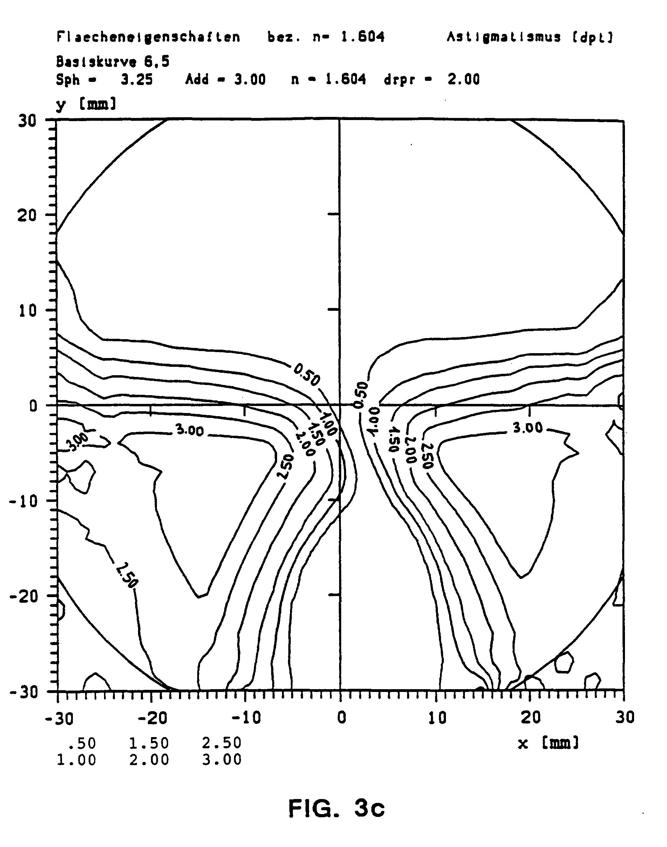

In den Figuren 1 bis 3 ist der Flächenastigmatismus (in dpt) für erfindungsgemäß gestaltete progressive Vorderflächen als Funktion der Koordinaten x und y (in mm) für ein Feld von 60*60 mm dargestellt, wobei zusätzlich die Begrenzungen eines typischen "rohrunden" Brillenglases eingetragen sind.
Bezüglich der Definition des Flächenastigmatismus wird beispielsweise auf die US-PS 2 878 721 verwiesen.
Die in den einzelnen Figuren dargestellten Flächen haben jeweils folgende "Grunddaten".

|        | BK | n     | Teilf. | a    | b    | c    |
|--------|----|-------|--------|------|------|------|
| Fig. 1 | 4  | 1,604 | Add    | 1dpt | 2dpt | 3dpt |

(fortgesetzt)

|        | BK  | n     | Teilf. | a | b | c |
|--------|-----|-------|--------|---|---|---|
| Fig. 2 | 5   | 1,604 |        | 1 | 2 | 3 |
| Fig. 3 | 6,5 | 1,604 |        | 1 | 2 | 3 |

Unter BK (in dpt) wird der Flächenbrechwert verstanden, den die Fläche in dem sog. Fernbezugspunkt mit den Koordinaten x=0mm, y=8mm hat. Im Fernbezugspunkt hat das Brillenglas eine zum Sehen in die Ferne für den jeweiligen Brillenträger geeignete Wirkung. Typische sphärische Wirkungen der dargestellten Brillengläser im Fernbezugspunkt können sein, wobei die augenseitige Fläche eine sphärische Fläche ist:

| Fig. 1 | - 2,5 dpt  |
|--------|------------|
| Fig. 2 | 0,5 dpt    |
| Fig. 3 | 3,25 dpt.  |

Mit Add (in dpt) wird die Addition bezeichnet, also die Zunahme des Flächenbrechwerts vom Fernbezugspunkt zum sog. Nahbezugspunkt, in dem das Brillenglas eine zum Sehen in die Nähe geeignete Wirkung hat. Wie der vorstehenden Übersicht zu entnehmen ist, betragen die Additionen 1 dpt, 2 dpt und 3 dpt.

In den Figuren la bis 3c sind sogenannte Isoastigmatismus-Linien für Flächenastigmatismus-Werte von 0,5 dpt, 1,0 dpt, 1,5 dpt, 2,0 dpt, 2,5 dpt und 3,0 dpt dargestellt. Wenn in einzelnen Figuren Isoastigmatismus-Linien für bestimmte Werte fehlen, so bedeutet dies, daß die jeweilige progressive Fläche keine Bereiche aufweist, in denen der Flächenastigmatismus diese Werte erreicht. Deutlich ist in Figuren die Abhängigkeit der Höhe y der Linie, auf der der Flächenastigmatismus 0,5 dpt beträgt, in einem Abstand von 25 mm von der Hauptlinie von dem Flächenbrechwert im Fernbezugspunkt und von der Addition zu erkennen.

Ferner zeigen die Figuren 1a bis 3c, daß die minimale Breite dx des Nahteils insbesondere in Höhe des in üblicher Weise definierten Nahbezugspunktes (in erster Linie) nur eine Funktion der Addition Add ist. Die Abhängigkeit von der Basiskurve, d.h. vom Flächenbrechwert im Fernbezugspunkt ist dagegen sehr viel geringer !

Im übrigen wird zur Offenbarung aller nicht näher erläuterten Einzelheiten ausdrücklich auf die Figuren verwiesen.

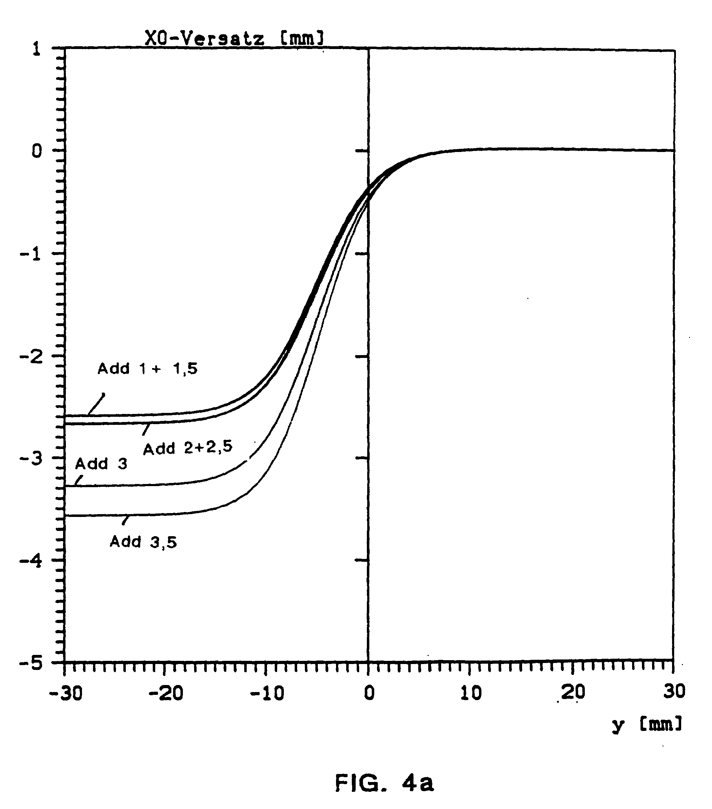

Fig. 4a zeigt die Projektion der Hauptlinie in die x,y-Ebene für Hauptlinien mit unterschiedlicher Addition, nämlich 1,0 dpt, 1,5 dpt, 2,0 dpt, 2,5 dpt, 3,0 dpt und 3,5 dpt und einem Flächenbrechwert 5dpt im Fernbezugspunkt. Diese Figur erläutert die erfindungsgemäß gewählte Abhängigkeit des sog. $x_0$-Versatzes der Hauptlinie, also des Versatzes, durch den die Hauptlinie dem "Sehstrahl" bei einer Blicksenkung folgt. Genauer gesagt folgt die Hauptlinie dem Durchstoßpunkt des Sehstrahls durch die progressive Fläche bei einer Blicksenkung.

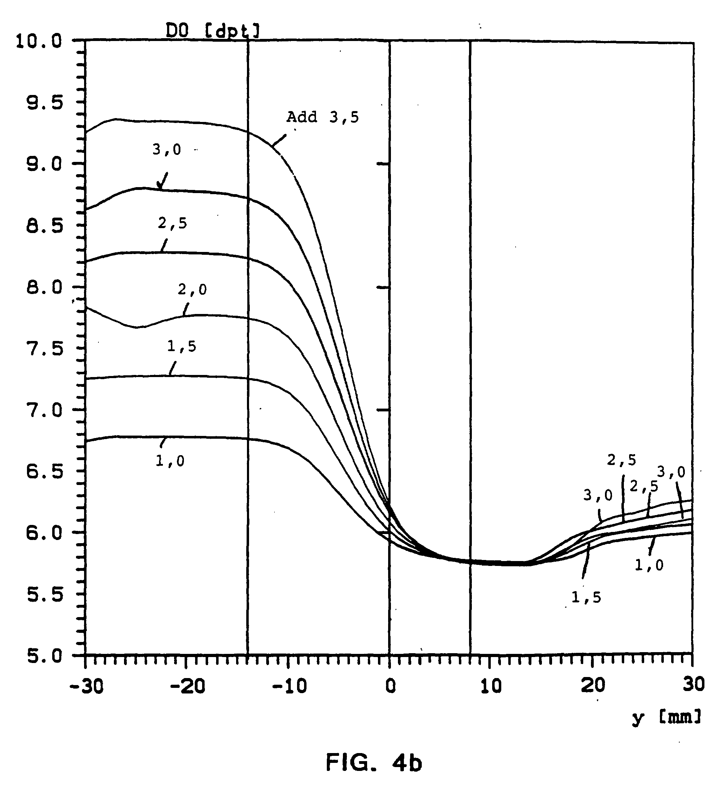

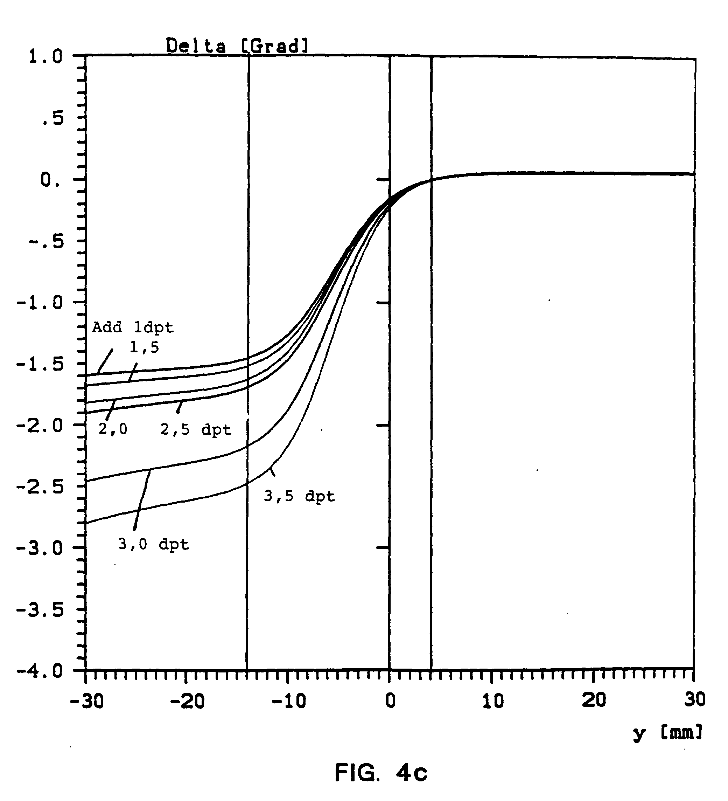

Die Figuren 4b und 4c zeigen den mittleren Flächenbrechwert bzw. den Winkel $\delta_o(y)$, d.h. die Steigung der Horizontalschnitte an diesen Hauptlinien für die in Fig. 4a dargestellten Hauptlinien. Auch bezüglich der Fig. 4 wird hinsichtlich der Offenbarung aller nicht näher erläuterten Einzelheiten ausdrücklich auf diese Figur verwiesen.

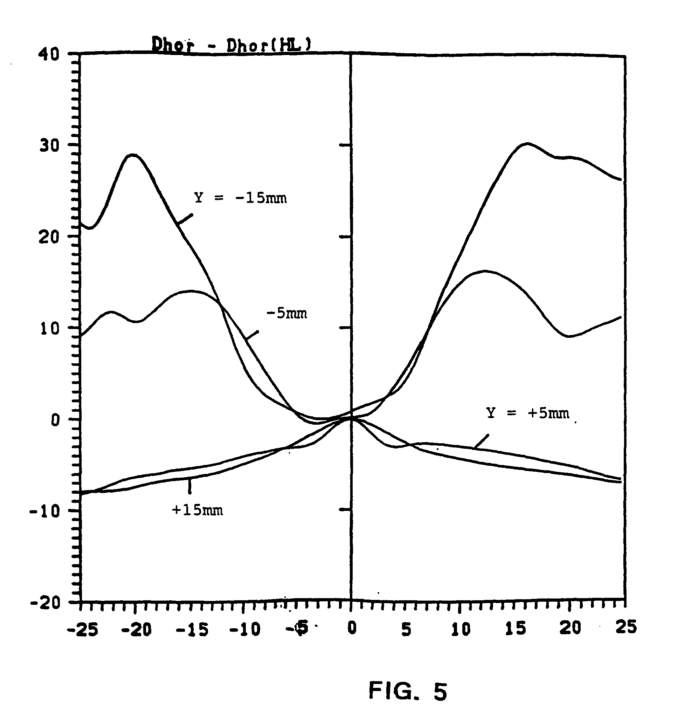

Fig. 5 zeigt die Horizontalradien-Differenz für verschiedene Werte von y, nämlich y = 15 mm, 5 mm, -5mm und -15mm.

Unter Horizontalradius wird der Radiuswert verstanden, den man durch den Schnitt der progressiven Fläche mit einer Horizontalebene y=const., also bei dem Beispiel y = 15 mm, 5 mm, -5mm und -15mm erhält. Unter Horizontalradien-Differenz wird nun die Differenz des Horizontalradius auf der Hauptlinie im Punkt x=$x_0$,y=$y_0$ und dem Horizontalradius in einem Punkt x=$x_1$,y=$y_0$ der progressiven Fläche verstanden. Der jeweilige Punkt $x_0$ ist Fig. 4a zu entnehmen.

Bei den erfindungsgemäßen Flächen ändert sich in jedem Falle im unteren Bereich des Fernteils, d.h. für y-Werte von 5 bis 10 mm in einem Streifen beidseits der Hauptlinie mit einer einseitigen Ausdehnung von etwa 3 bis 8 mm die Horizontalradien-Differenz mit einem vergleichsweise großen Gradienten, während die Änderung außerhalb dieses Streifens einen wesentlich kleineren Gradienten aufweist. In der Progressionszone (y = - 5mm) und im Nahteil (y =-15 mm) ist dagegen in diesem Streifen beidseits der Hauptlinie der Gradient der Horizontalradien-Differenz vergleichsweise gering. Dafür ändert sich in diesem Bereich die Horizontalradien-Differenz außerhalb dieses Streifens mit einem sehr großen Gradienten und erreicht ein Maximum bei etwa x = 12 bis 20 mm. Nach "Durchlaufen" des Maximums durchläuft die Horizontalradien-Differenz ein ausgeprägtes Minimum, das mit sinkenden y-Werten "nach außen" wandert.

Durch diesen Verlauf der Horizontalradien-Differenz erreicht man, daß die Linien gleichen Flächenbrechwerts horizontal in die Hauptlinie einmünden.

Einen ähnlichen Verlauf der Horizontalradien-Differenz erhält man auch bei anderen Additionen und Basiskurven, so daß auf eine Darstellung für weitere Additionen und Basiskurven verzichtet wird.

Die vorstehenden Informationen ermöglichen es einem Fachmann ohne weiteres, erfindungsgemäße Flächen in einer für eine Fertigung geeigneten Form, also beispielsweise als Pfeilhöhen zu berechnen:

Zur eindeutigen Beschreibung einer progressiven Fläche genügt eine Funktion der unabhängigen Variablen x und y, also beispielsweise der Flächenastigmatismus Ast(x,y) und die Kenntnis eines Streifens 1. Ordnung entlang der Hauptlinie. Dieser Streifen 1. Ordnung ist durch drei eindimensionale Funktionen eindeutig bestimmt. Diese Funktionen können beispielsweise die Projektion der Hauptlinie in die x,y-Ebene ($x_0$(y)-Versatz), die Projektion der Hauptlinie in die y,z-Ebene ($z_0$(y)-Versatz), der mittlere Brechwert H längs der Hauptlinie, sowie der Winkel $\delta_0$(y), d.h. die Steigung der Horizontalschnitte an der Hauptlinie sein.

Bestimmen kann man nun die Fläche beispielsweise mittels einer Zielfunktion Z

$$\text{Minimum } Z = \int [(A(x,y)-A_v(x,y))^2 + (H(x_0(y),y)-H_v(y))^2 +$$

$$((x_0(y),y)-\delta_0(y))^2 \delta z/\delta x + z'_0(0)^2 + z_0(0))^2]\delta x dy.$$

Hierbei bedeutet der Index v, daß es sich um einen Vorgabewert handelt. Ferner müssen die Startwerte $z_0 = z'_0 = 0$ für y=0 mit $z'_0 = \delta z/\delta y$ gegeben sein. $H_v$ ist der mittlere Flächenbrechwert auf der Hauptlinie.

Wie bereits erwähnt, kann bei der erfindungsgemäßen Serie progressiver Brillengläser die augenseitige Fläche bei sphärischer Verordnung eine asphärische Fläche und bei torischer Verordnung eine atorischen Fläche sein, wobei die Basiskurve der progressiven Fläche 1 dpt bis 1,5 dpt "flacher" als bei sphärischer bzw. torischer augenseitiger Fläche gewählt ist.

Die durch die "flachere Basiskurve" entstehenden "Bildfeh1er" in Gebrauchsstellung werden durch die asphärische bzw. atorische Fläche korrigiert.

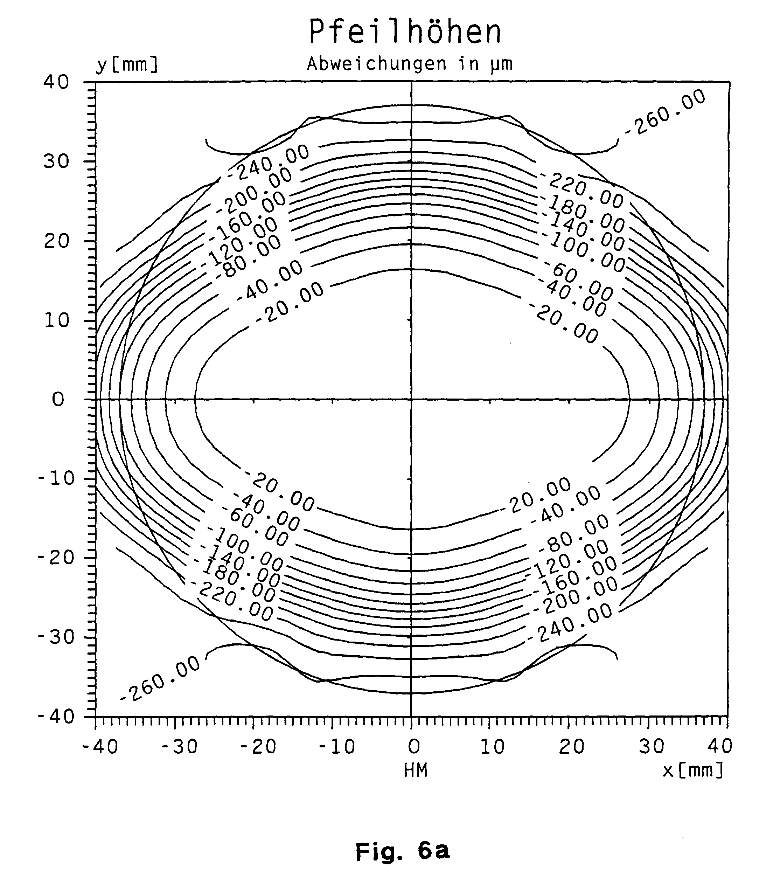

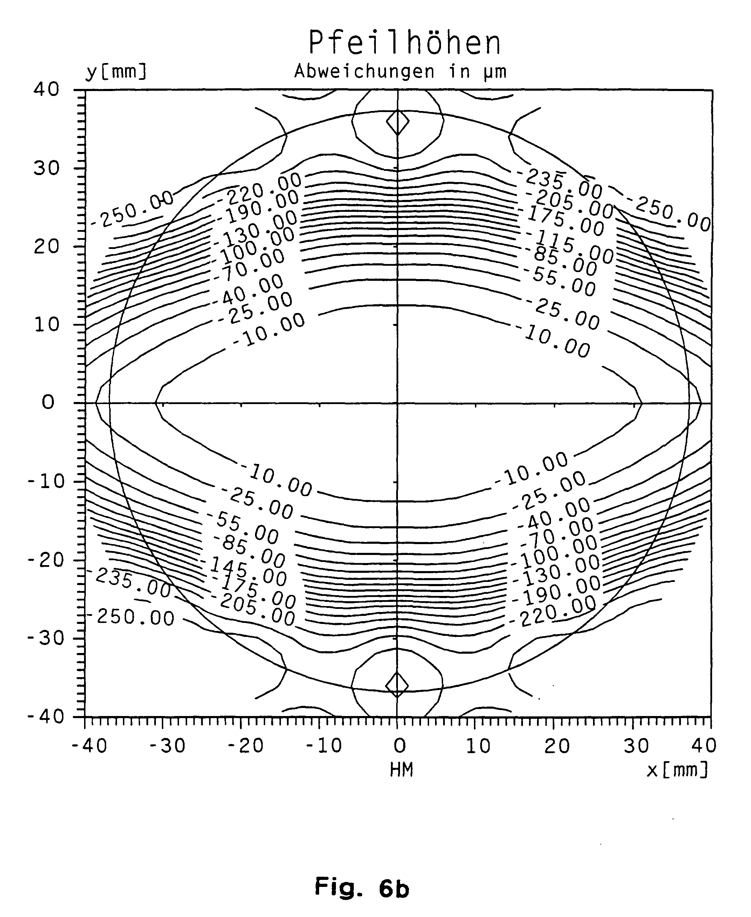

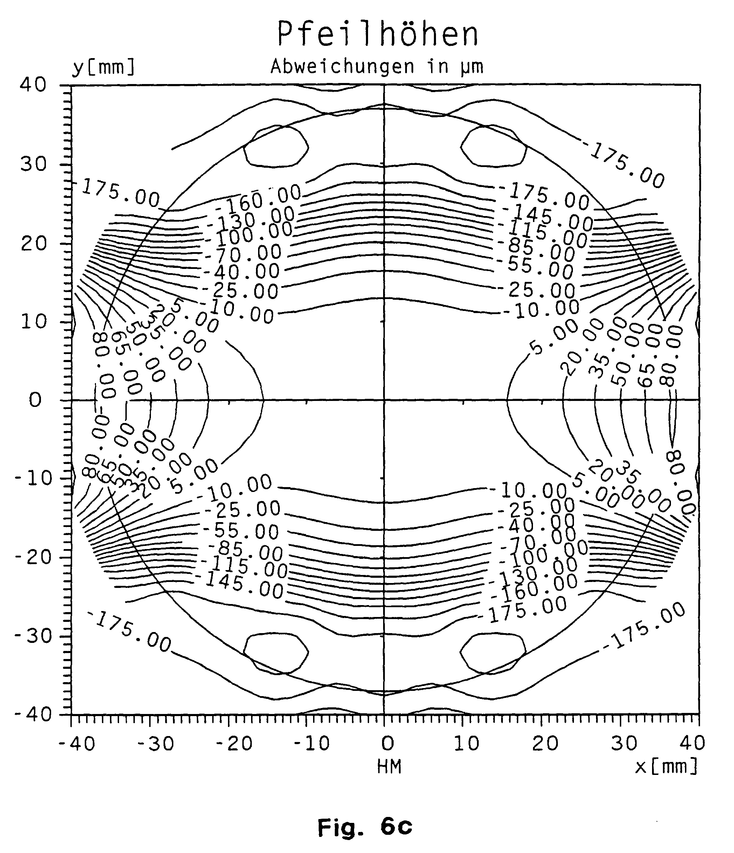

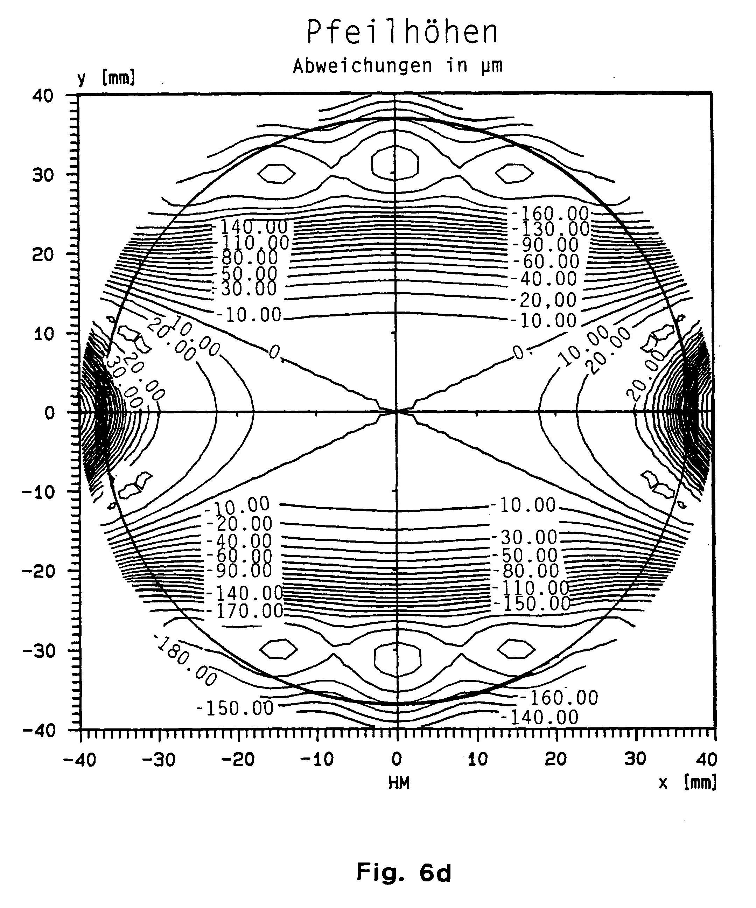

Fig. 6 zeigt die Abweichungen in µm einer atorischen Fläche, die für die genannte Korrektur der Bildfehler benötigt wird, von einer sphärischen Fläche, die sich im Scheitelpunkt an die atorische Fläche "anschmiegt", die also kreisförmige Hauptschnitte mit einem Radius aufweist, der dem Scheitelradius der asphärischen Hauptschnitte der atorischen Fläche entspricht.

Sämtliche dargestellten atorischen Flächen sind für Gläser mit einem Brechungsindex von 1,604 berechnet.

|  | spärische Wirkung | Minuszylinder | Achslage |
|---|---|---|---|
| Fig. 6a | -4,0 dpt | +2,25 dpt | 30° |
| Fig. 6b | -4,0 | + 2,25 | 80° |
| Fig. 6c | -4,0 | +2,25 | 110° |
| Fig. 6d | -4,0 | + 2,25 | 150° |

Die Angabe beziehen sich jeweils auf die Hauptschnitte der atorischen Flächen. Die Abhängigkeit von der Achslage ist dabei nicht so signifikant, wie die erfindungsgemäß aufgefundene Abhängigkeit von der sphärischen Wirkung (Wirkung des "stärkeren" Hauptschnitts) und dem Minuszylinder (Wirkungsdifferenz zwischen dem stärkeren und dem schwächeren Hauptschnitt).

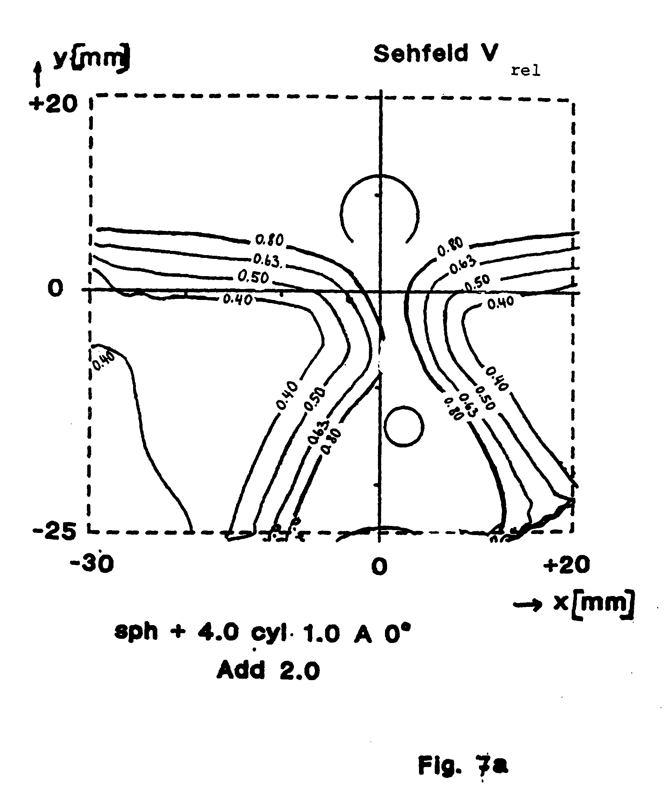

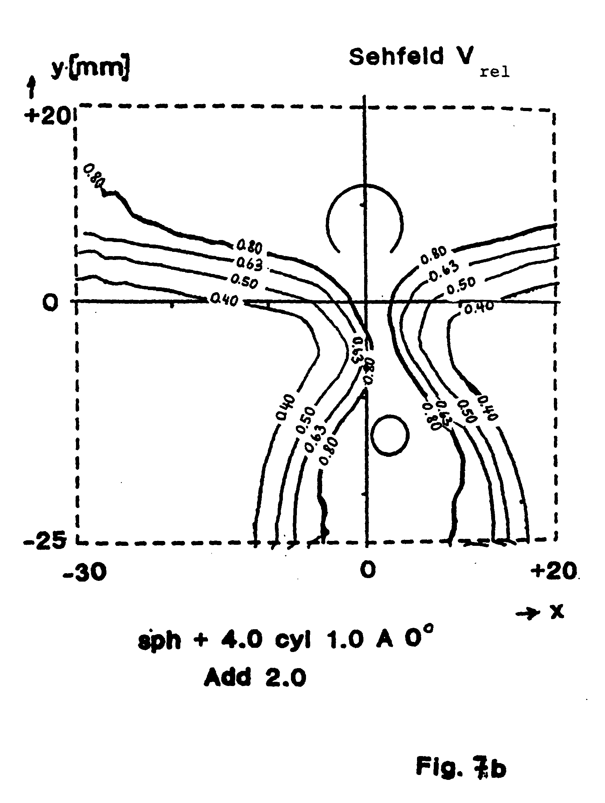

Die Figuren 7a und 7b zeigen die Iso-Visus-Linien für ein progressives Brillenglas mit atorischer augenseitiger Fläche (7a) und mit torischer augenseitiger Fläche (7b).

Bei beiden Gläsern ist die Fernteilwirkung 4 dpt, die Addition 2 dpt und der Zylinder 1 dpt. Die Achslage beträgt 0°. Die Basiskurve des in Fig. 1a dargestellten Glases ist jedoch um 1,5 dpt "flacher". Deutlich ist zu sehen, daß bei gleicher optischer Leistung das progressive Brillenglas mit atorischer augenseitiger Fläche kosmetisch günstiger ist.

Zusammenfassend ist zu sagen, daß die Pfeilhöhendifferenz für jeden Hauptschnitt und jede Kombination von sphärischer Wirkung und "Zylinder" durch eine Funktion gemäß Anspruch 15 beschrieben wird. Die Parameter a und b hängen wiederum linear vom Zylinderwert ab, wobei der die Steigung angebende Koeffizient linear von der sphärischen Wirkung abhängt. Der den Schnittpunkt der Geraden mit der Ordinate angebende Koeffizient hängt quadratisch von der sphärischen Wirkung ab. Somit kann die Pfeilhöhendifferenz mit 20 Parametern für jeden Hauptschnitt beschrieben werden.

Vorstehend ist die Erfindung anhand von Ausführungsbeispielen ohne Beschränkung des allgemeinen Erfindungsgedankens beschrieben worden, wie der sich aus den Ansprüchen ergibt. Insbesondere ist es möglich, die beschriebenen atorischen Flächen auch mit andersartig aufgebauten progressiven Flächen einzusetzen.

**Patentansprüche**

1. Serie progressiver Brillengläser, bei der die einzelnen Brillengläser der Serie einen unterschiedlichen Flächenbrechwert im Fernteil und/oder eine unterschiedliche Addition Add haben, und von denen jedes

   - eine Fläche und insbesondere eine Vorderfläche mit kontinuierlich variierendem Flächenbrechwert aufweist, der von dem jeweiligen zum Sehen in die Ferne geeigneten Wert BK in dpt im Punkt mit den Koordinaten x=0mm, y=8mm im unteren Bereich des Fernteils längs einer gewundenen Hauptlinie, die in etwa mit der Hauptblicklinie bei Blicksenkung zusammenfällt, auf einen zum Sehen in die Nähe geeigneten Wert im oberen Bereich des Nahteils ansteigt, der um den Wert Add in dpt der Addition höher als der Flächenbrechwert BK im unteren Bereich des Fernteils ist, und
   - eine Fläche und insbesondere eine augenseitige Fläche aufweist, die sphärisch oder asphärisch gestaltet sein kann,

   dadurch **gekennzeichnet**, daß für die maximale Höhe y der Linie, auf der der Flächenastigmatismus 0,5 dpt beträgt, und die den für deutliches Sehen geeigneten Bereich des Fernteils nach unten begrenzt, beidseits in einem Abstand von 25 mm von der Hauptlinie gilt:

   $$y = f(Add, BK) = b(BK) + a/(Add*1000)$$

   $$b(BK) = a_0 + a_1*BK + a_2*BK^2$$

   und daß für die Koeffizienten auf der nasalen und der temporalen Seite der Hauptlinie gilt:

   |       | nasal         | temporal              |
   |-------|---------------|-----------------------|
   | a     | $-8,5 \pm 20\%$ | $-7,5 \pm 20\%$       |
   | $a_0$ | 18...19        | 19...20 mm            |
   | $a_1$ | $-3580 \pm 20\%$ | $-4520 \pm 20\%$ mm$^2$ |
   | $a_2$ | $390\,000 \pm 20\%$ | $480\,000 \pm 20\%$ mm$^3$ |

2. Serie nach Anspruch 1,
   dadurch **gekennzeichnet,** daß die Toleranzen für die Koeffizienten a, $a_1$ und $a_2 \pm 5\%$ sind.

3. Serie nach Anspruch 1 oder 2,
   dadurch **gekennzeichnet,** daß der Koeffizient $a_0$ auf der nasalen Seite der Wert 18 mm und auf der temporalen Seite den Wert 19,3 mm hat.

4. Serie nach einem der Ansprüche 1 bis 3,
   dadurch **gekennzeichnet,** daß die minimale Breite dx des Nahteils nur eine Funktion der Addition Add ist.

5. Serie nach Anspruch 4,
   dadurch **gekennzeichnet,** daß für die Breite dx des Nahteils in Höhe des Nahbezugspunktes gilt:

   $$dx = b' + a'/(Add*1000)$$

   mit a' = $14,6 \pm 20\%$
   b' = 5..7 mm

6. Serie nach Anspruch 4 oder 5,
   dadurch **gekennzeichnet,** daß die Toleranz für den Koeffizienten a' $\pm 5\%$ ist, und daß der Koeffizient b' den Wert 6 mm hat.

7. Serie nach einem der Ansprüche 1 bis 6,
   dadurch **gekennzeichnet,** daß für den Versatz $x_0$ der Projektion der Hauptlinie in die x, y-Ebene gilt:

$$x_0 = b'' + a'' - a'' / (1 + e^{c*(y+d)})$$

und daß für die Koeffizienten gilt:

$$2 \leq a'' \leq 4,3 \text{ mm}$$

$$-0,03 \leq b'' \leq 0 \text{ mm}$$

$$-0,4 \leq c \leq -0,3 \text{ mm}^{-1}$$

$$4,5 \leq d \leq 5,1 \text{ mm}$$

**8.** Serie nach Anspruch 7,
dadurch **gekennzeichnet,** daß der Koeffizient a" eine Funktion der Addition Add und des Fernteil-Flächenbrechwerts BK ist.

**9.** Serie nach Anspruch 8,
dadurch **gekennzeichnet,** daß gilt:

$$a'' = \alpha * ADD + \beta * BK + \Gamma$$

wobei für die Koeffizienten gilt:

$$100 \leq \beta \leq 300 \text{ mm}^2$$

$$Add \leq 2,5 \text{ dpt}$$

$$0 \leq \alpha \leq 200 \text{ mm}^2$$

$$1,3 \leq \Gamma \leq 2 \text{ mm}$$

$$Add > 2,5 \text{ dpt}$$

$$800 \leq \alpha \leq 1100 \text{ mm}^2$$

$$0,7 \leq \Gamma \leq 0 \text{ mm}$$

**10.** Serie nach einem der Ansprüche 1 bis 9,
dadurch **gekennzeichnet,** daß der Flächenastigmatismus auf der Hauptlinie wenigstens für -18mm < y $\leq$ 12mm Null ist.

**11.** Serie nach einem der Ansprüche 1 bis 10,
dadurch **gekennzeichnet,** daß die Linien gleichen Flächenbrechwerts horizontal in die Hauptlinie einmünden.

**12.** Serie nach einem der Ansprüche 1 bis 11,

dadurch **gekennzeichnet,** daß die augenseitige Fläche bei sphärischer Verordnung eine asphärische Fläche und bei torischer Verordnung eine atorischen Fläche ist, und daß die Basiskurve der progressiven Fläche 1 dpt bis 1,5 dpt "flacher" als bei sphärischer bzw. torischer augenseitiger Fläche gewählt ist.

**13.** Serie nach Anspruch 12,
dadurch **gekennzeichnet,** daß das Design der atorischen Fläche in Abhängigkeit von der Achslage des Zylinders variiert.

**14.** Serie nach Anspruch 12 oder 13,
dadurch **gekennzeichnet,** daß die atorische Fläche wenigstens einen Hauptschnitt aufweist, der von der Kreisform abweicht.

**15.** Serie nach Anspruch 14,
dadurch **gekennzeichnet,** daß die Abweichung dz zwischen der Pfeilhöhe des von der Kreisfrom abweichenden Schnitts und eines Kreises mit einem Radius, der dem Scheitelradius der Asphäre entspricht, gegeben ist durch:

$$dz = a_j * r^2 + b_j * r^4$$

hierbei bedeuten

dz    die Abweichung in $\mu$m zwischen Scheitelkreis und Hauptschnitt
r     der Abstand vom Scheitel in mm,

und daß für die Koeffizienten gilt:

$$|a_j| \leq 2 * 10^{-4} \ mm^{-1}$$

$$|b_j| \leq 1 * 10^{-6} \ mm^{-3}$$

wobei der Hauptschnitt mit der geringeren Scheitelkrümmung mit j=1 und der mit der größeren Scheitelkrümmung mit j=2 bezeichnet ist.

**16.** Serie nach Anspruch 15,
dadurch **gekennzeichnet,** daß die Koeffizienten $a_j$ und $b_j$ durch folgende Funktionale gegeben sind:

$$a_j = f_{j1} (s,z) = a_{j1} (s) + b_{j1} (s) * zyl$$

$$b_j = f_{j2} (s,z) = a_{j2} (s) + b_{j2} (s) * zyl$$

hierbei bedeuten

s     die sphärische Wirkung im Fernbezugspunkt in Minuszylinderschreibweise
zyl   die zylindrische Wirkung im Fernbezugspunkt in Minuszylinder-Schreibweise, und

daß die Koeffizienten $a_{j2}$ und $b_{j2}$ eine Funktion zweiter Ordnung von s sind.

**17.** Serie nach Anspruch 16,
dadurch **gekennzeichnet,** daß für die Koeffizienten $a_{ji}$ und $b_{ji}$ gilt:

$$|a_{j1}| \leq 5 * 10^{-5} \ mm^{-1}$$

$$|b_{j1}| \leq 5 * 10^{-2}$$

$$|a_{j2}| \leq 4 * 10^{-7}\ mm^{-3}$$

$$|b_{j2}| \leq 3 * 10^{-4}\ mm^{-2}$$

**18.** Serie nach Anspruch 16 oder 17,
dadurch **gekennzeichnet,** daß die Koeffizienten $a_{j2}$ und $b_{j2}$ durch folgende Funktionale gegeben sind:

$$a_{j2} = a_{j21} + b_{j21} * s + c_{j21} * s^2$$

$$b_{j2} = a_{j22} + b_{j22} * s + c_{j22} * s^2$$

**19.** Serie nach Anspruch 18,
dadurch **gekennzeichnet,** daß für die Koeffizienten a, b und c gilt:

$$a_{j21} = 2{,}35 * 10^{-8}\ mm^{-3} \pm 50\ \%$$

$$b_{j21} = -1{,}7 * 10^{-5}\ mm^{-2} \pm 50\ \%$$

$$c_{j21} = -8 * 10^{-3}\ mm^{-1} \pm 50\ \%$$

**20.** Serie nach Anspruch 19,
dadurch **gekennzeichnet,** daß für die Koeffizienten der beiden Hauptschnitte gilt:

$$a_{121} = 2{,}35 * 10^{-8}\ mm^{-3} \pm 50\ \%$$

$$b_{j21} = -1{,}7 * 10^{-5}\ mm^{-2} \pm 50\ \%$$

$$c_{j21} = -8 * 10^{-3}\ mm^{-1} \pm 50\ \%$$

$$a_{122} = 1{,}73 * 10^{-5}\ mm^{-2} \pm 50\ \%$$

$$b_{122} = 3{,}22 * 10^{-2}\ mm^{-1} \pm 50\ \%$$

$$c_{122} = -2{,}27 \pm 50\ \%$$

$$a_{222} = -2{,}76 * 10^{-5}\ mm^{-2} \pm 50\ \%$$

$$b_{222} = -1{,}29 * 10^{-3}\ mm^{-1} \pm 50\ \%$$

$$c_{222} = -0,172 \pm 50\ \%$$

## Claims

1. Series of progressive spectacle lenses in which the individual lenses of the series have a different surface power in the distance-vision portion and/or a different addition ADD, and each of which

   - has a surface and especially a front surface with continuously varying surface power, which rises from the respective power BK in dioptre suitable for seeing in the distance at the point with the coordinates x=0mm, y=8mm in the lower region of the distance-vision portion along a curved principal line which coincides approximately with the main line of vision when the gaze is lowered, to a value suitable for seeing close-up in the upper region of the near-vision portion, which is higher by the value of the addition ADD in dioptre than the surface power BK in the lower region of the distance-vision portion, and
   - has a surface and especially an eye-facing surface, which can be designed spherical or aspherical,

   **characterised in that** for the maximum height y of the line on which the surface astigmatism is 0.5 dpt and which delimits downwards the region of the distance-vision portion suitable for seeing clearly, on both sides at a distance of 25 mm from the principal line the following applies:

   $$y = f(Add,BK) = b(BK) + a/(Add*1000)$$

   $$b(BK)= a_0 + a_1\ *BK + a_2\ *BK^2$$

   and in that for the coefficients on the nasal and temporal side of the principal line the following applies:

   |       | nasal            | temporal               |
   |-------|------------------|------------------------|
   | a     | $-8.5 \pm 20\%$  | $-7.5 \pm 20\%$        |
   | $a_0$ | 18...19          | 19...20 mm             |
   | $a_1$ | $-3580 \pm 20\%$ | $-4520 \pm 20\%$ mm$^2$ |
   | $a_2$ | $390\,000 \pm 20\%$ | $480\,000 \pm 20\%$ mm$^3$ |

2. Series according to claim 1,
   **characterised in that** the tolerances for the coefficients are a, $a_1$ and $a_2 \pm 5\%$.

3. Series according to claim 1 or 2,
   **characterised in that** the coefficient $a_0$ has the value 18 mm on the nasal side and the value 19.3 mm on the temporal side.

4. Series according to one of claims 1 to 3,
   **characterised in that** the minimum width dx of the near-vision portion is only a function of the addition Add.

5. Series according to claim 4,
   **characterised in that** for the width dx of the near-vision portion at the height of the near-vision reference point, the following applies:

   $$dx = b' + a'/(Add*1000)$$

   with a' = $14.6 \pm 20\%$
   b' = 5..7 mm

6. Series according to claim 4 or 5,
   **characterised in that** the tolerance for the coefficient a' is $\pm 5\%$, and in that the coefficient b' has the value 6 mm.

**7.** Series according to one of claims 1 to 6,
**characterised in that** for the offset $x_0$ of the projection of the principal line into the x,y-plane the following applies:

$$x_0 = b'' + a'' - a''/(1 + e^{c*(y+d)})$$

and that for the coefficients the following applies:

$$2 \leq a'' \leq 4.3 \text{ mm}$$

$$-0.03 \leq b'' \leq 0 \text{ mm}$$

$$-0.4 \leq c \leq -0.3 \text{ mm}^{-1}$$

$$4.5 \leq d \leq 5.1 \text{ mm}$$

**8.** Series according to claim 7,
**characterised in that** the coefficient a'' is a function of the addition Add and of the surface power BK of the distance-vision portion.

**9.** Series according to claim 8,
**characterised in that** the following applies:

$$a'' = \alpha * ADD + \beta * BK + \Gamma$$

wherein for the coefficients the following applies:

$$100 \leq \beta \leq 300 \text{ mm}^2$$

$$Add \leq 2.5 \text{ dpt}$$

$$0 \leq \alpha \leq 200 \text{ mm}^2$$

$$1.3 \leq \Gamma \leq 2 \text{ mm}$$

$$Add > 2.5 \text{ dpt}$$

$$800 \leq \alpha \leq 1100 \text{ mm}^2$$

$$0.7 \leq \Gamma \leq 0 \text{ mm}$$

**10.** Series according to one of claims 1 to 9,
**characterised in that** that the surface astigmatism on the principal line is zero at least for -18mm < y ≤ 12mm.

**11.** Series according to one of claims 1 to 10,
**characterised in that** the lines of the same surface power run horizontally into the principal line.

12. Series according to one of claims 1 to 11,
**characterised in that** the eye-facing surface in a spherical prescription is an aspherical surface and in a toric prescription is an atoric surface, and in that the base curve of the progressive surface is selected 1 dpt to 1.5 dpt "flatter" than in a spherical or toric eye-facing surface.

13. Series according to claim 12,
**characterised in that** the design of the atoric surface varies in dependence on the position of the cylinder axis.

14. Series according to claim 12 or 13,
**characterised in that** the atoric surface has at least one principal section which deviates from a circular form.

15. Series according to claim 14,
**characterised in that** the deviation dz between the sagitta of the section deviating from the circular form and of a circle having a radius which corresponds to the apex radius of the asphere, is given by:

$$dz = a_j * r^2 + b_j * r^4$$

wherein

dz    stands for the deviation in $\mu$m between the apex circle and the principal section
r    stands for the distance from the apex in mm,

and in that the following applies for the coefficients:

$$|a_j| \leq 2 * 10^{-4} \ mm^{-1}$$

$$|b_j| \leq 1 * 10^{-6} \ mm^{-3}$$

wherein the principal section with the smaller apex curvature is designated by j=1 and the one with the greater apex curvature by j=2.

16. Series according to claim 15,
**characterised in that** the coefficients $a_j$ and $b_j$ are given by the following functionals:

$$a_j = f_{j\,1}(s,z) = a_{j\,1}(s) + b_{j\,1}(s) * zyl$$

$$b_j = f_{j\,2}(s,z) = a_{j\,2}(s) + b_{j\,2}(s) * zyl$$

wherein

s    means the spherical power in the distance reference point in the minus cylinder manner of notation
zyl    means the cylindrical power in the distance reference point in the minus cylinder manner of notation, and

in that the coefficients $a_{j\,2}$ and $b_{j\,2}$ are a second-order function of s.

17. Series according to claim 16,
**characterised in that** that for the coefficients $a_{ji}$ and $b_{ji}$ the following applies:

$$|a_{j1}| \leq 5 * 10^{-5} \ mm^{-1}$$

$$|b_{j1}| \leq 5 * 10^{-2}$$

$$|a_{j2}| \leq 4 * 10^{-7} \text{ mm}^{-3}$$

$$|b_{j2}| \leq 3 * 10^{-4} \text{ mm}^{-2}$$

**18.** Series according to claim 16 or 17,
**characterised in that** the coefficients $a_{j\,2}$ and $b_{j\,2}$ are given by the following functionals:

$$a_{j2} = a_{j21} + b_{j21} * s + c_{j21} * s^2$$

$$b_{j\,2} = a_{j22} + b_{j22} * s + c_{j22} * s^2$$

**19.** Series according to claim 18,
**characterised in that** the following applies for the coefficients a, b and c:

$$a_{j21} = 2.35 * 10^{-8} \text{ mm}^{-3} \pm 50\%$$

$$b_{j21} = -1.7 * 10^{-5} \text{ mm}^{-2} \pm 50\%$$

$$c_{j21} = -8 * 10^{-3} \text{ mm}^{-1} \pm 50\%$$

**20.** Series according to claim 19,
**characterised in that** the following applies for the coefficients of the two principal sections:

$$a_{j21} = 2.35 * 10^{-8} \text{ mm}^{-3} \pm 50\%$$

$$b_{j21} = -1.7 * 10^{-5} \text{ mm}^{-2} \pm 50\%$$

$$c_{j21} = -8 * 10^{-3} \text{ mm}^{-1} \pm 50\%$$

$$a_{122} = 1.73 * 10^{-5} \text{ mm}^{-2} \pm 50\%$$

$$b_{122} = 3.22 * 10^{-2} \text{ mm}^{-1} \pm 50\%$$

$$c_{122} = -2.27 \pm 50\%$$

$$a_{222} = -2.76 * 10^{-5} \text{ mm}^{-2} \pm 50\%$$

$$b_{222} = -1.29 * 10^{-3} \text{ mm}^{-1} \pm 50\%$$

$$c_{222} = -0.172 \pm 50\%$$

**Revendications**

1. Série de verres de lunettes progressifs, dans laquelle les verres de lunettes individuels de la série ont une puissance de surface différente dans la partie éloignée et/ou une addition (Add) différente, et dont chacun

   - présente une surface, et en particulier une surface avant dont la puissance de surface varie de façon continue et augmente à partir de la valeur (BK) en dpt respective adaptée à la vision de loin au point ayant les coordonnées x = 0 mm, y = 8 mm dans la zone inférieure de la partie éloignée suivant une ligne principale courbe, qui coïncide approximativement avec la ligne de visée principale lorsque l'on baisse le regard, jusqu'à une valeur adaptée à la vision de près dans la zone supérieure de la partie proche, qui est supérieure de la valeur (Add) en dpt de l'addition à la puissance de surface (BK) dans la zone inférieure de la partie éloignée, et
   - présente une surface, et en particulier une surface du côté de l'oeil, qui peut être réalisée de façon sphérique ou asphérique,

   caractérisée en ce que pour la hauteur maximale y de la ligne, sur laquelle l'astigmatisme de surface s'élève à 0,5 dpt et qui limite vers le bas la zone de la partie éloignée adaptée à la vision nette, des deux côtés à une distance de 25 mm de la ligne principale,

   $$y = f(Add,BK) = b(BK) + a/(Add*1000)$$

   $$b(BK) = a_0 + a_1 *BK + a_2 *BK^2$$

   s'appliquent,
   et en ce que pour les coefficients du côté nasal et du côté temporal de la ligne principale :

   |       | nasal | temporal |
   |-------|-------|----------|
   | a     | $-8,5 \pm 20\%$ | $-7,5 \pm 20\%$ |
   | $a_0$ | 18 ... 19 mm | 19 ... 20 mm |
   | $a_1$ | $-3580 \pm 20\%$ mm$^2$ | $-4520 \pm 20\%$ mm$^2$ |
   | $a_2$ | $390\,000 \pm 20\%$ mm$^3$ | $480\,000 \pm 20\%$ mm$^3$. |

   s'appliquent.

2. Série selon la revendication 1, caractérisée en ce que les tolérances pour les coefficients a, $a_1$ et $a_2$ sont $\pm 5\%$.

3. Série selon la revendication 1 ou 2, caractérisée en ce que le coefficient $a_0$ a la valeur 18 mm du côté nasal et la valeur 19,3 du côté temporal.

4. Série selon l'une quelconque des revendications 1 à 3, caractérisée en ce que la largeur minimale dx de la partie proche est seulement une fonction de l'addition (Add).

5. Série selon la revendication 4, caractérisée en ce que pour la largeur dx de la partie proche à la hauteur du point de référence proche :

   $$dx = b' + a'/(Add*1000)$$

   s'applique, avec

   $a' = 14,6 \pm 20\%$
   $b' = 5 ... 7$ mm

6. Série selon la revendication 4 ou 5, caractérisée en ce la tolérance pour le coefficient a' est $\pm 5\%$, et en ce que le coefficient b' a la valeur de 6 mm.

**7.** Série selon l'une quelconque des revendications 1 à 6, caractérisée en pour le décentrage $x_0$ de la projection de la ligne principale dans le plan x,y :

$$x_0 = b'' + a'' - a''/(1 + e^{c(y+d)})$$

s'applique, et en ce que pour les coefficients :

$$2 \leq a'' < 4,3 \text{ mm}$$

$$-0,03 \leq b'' \leq 0 \text{ mm}$$

$$-0,4 \leq c \leq -0,3 \text{ mm}^{-1}$$

$$4,5 \leq d \leq 5,1 \text{ mm}$$

s'appliquent.

**8.** Série selon la revendication 7, caractérisée en ce que le coefficient a'' est une fonction de l'addition (Add) et de la puissance de surface de la partie éloignée (BK).

**9.** Série selon la revendication 8, caractérisée en ce que :

$$a'' = \alpha * \text{ADD} + \beta * \text{BK} + \Gamma$$

s'applique, où pour les coefficients :

$$100 \leq \beta \leq 300 \text{ mm}^2$$

$$\text{Add} \leq 2,5 \text{ dpt}$$

$$0 \leq \alpha \leq 200 \text{ mm}^2$$

$$1,3 \leq \Gamma \leq 2 \text{ mm}$$

$$\text{Add} > 2,5 \text{ dpt}$$

$$800 \leq \alpha \leq 1100 \text{ mm}^2$$

$$0,7 \leq \Gamma \leq 0 \text{ mm}$$

s'appliquent.

**10.** Série selon l'une quelconque des revendications 1 à 9, caractérisée en ce que l'astigmatisme de surface sur la ligne principale est zéro au moins pour -18 mm < y ≤ 12 mm.

**11.** Série selon l'une quelconque des revendications 1 à 10, caractérisée en ce que les lignes d'une même puissance de surface aboutissent horizontalement à la ligne principale.

**12.** Série selon l'une quelconque des revendications 1 à 11, caractérisée en ce que la surface du côté de l'oeil est une surface asphérique pour une prescription sphérique et une surface atorique pour une prescription torique, et en ce que la courbe de base de la surface progressive est choisie de 1 dpt à 1,5 dpt "plus aplatie" que pour la surface sphérique ou torique du côté de l'oeil.

**13.** Série selon la revendication 12, caractérisée en ce que la conception de la surface atorique varie en fonction de la position axiale du cylindre.

**14.** Série selon la revendication 12 ou 13, caractérisée en ce que la surface atorique présente au moins une coupe principale déviant de la forme circulaire.

**15.** Série selon la revendication 14, caractérisée en ce que l'écart dz entre la flèche de la coupe déviant de la forme circulaire et celle d'un cercle avec un rayon qui correspond au rayon azimutal de la non-sphère, est donné par :

$$dz = a_j * r^2 + b_j * r^4$$

où

dz    est l'écart en $\mu$m entre le cercle azimutal et la coupe principale
r    est la distance du sommet en mm

et pour les coefficients :

$$|a_j| \leq 2 * 10^{-4} \ mm^{-1}$$

$$|b_j| \leq 1 * 10^{-6} \ mm^{-3}$$

s'appliquent, la coupe principale avec la courbure azimutale plus faible étant désignée par j=1 et celle avec la courbure azimutale plus forte par j=2.

**16.** Série selon la revendication 15, caractérisée en ce que les coefficients $a_j$ et $b_j$ sont donnés par la relation fonctionnelle suivante :

$$a_j = f_{j1}(s, z) = a_{j1}(s) + b_{j1}(s) * zyl$$

$$b_j = f_{j2}(s,z) = a_{j2}(s) + b_{j2}(s) * zyl$$

où

s    est l'action sphérique au point de référence éloigné en notation de cylindre négatif
zyl    est l'action cylindrique au point de référence éloigné en notation de cylindre négatif, et

les coefficients $a_{j2}$ et $b_{j2}$ sont une fonction de deuxième ordre de s.

**17.** Série selon la revendication 16, caractérisée en ce que pour les coefficients $a_{ji}$ et $b_{ji}$ :

$$|a_{j1}| \leq 5 * 10^{-5} \ mm^{-1}$$

$$|b_{j1}| \leq 5 * 10^{-2}$$

$$|a_{j2}| \leq 4 * 10^{-7} \ mm^{-3}$$

$$|b_{j2}| \leq 3 * 10^{-4} \ mm^{-2}$$

s'appliquent.

**18.** Série selon la revendication 16 ou 17, caractérisée en ce que les coefficients $a_{j2}$ et $b_{j2}$ sont donnés par la relation fonctionnelle suivante :

$$a_{j2} = a_{j21} + b_{j21} * s + c_{j21} * s^2$$

$$b_{j2} = a_{j22} + b_{j22} * s + c_{j22} * s^2$$

**19.** Série selon la revendication 18, caractérisée en ce que pour les coefficients a, b et c :

$$a_{j21} = 2{,}35 * 10^{-8} \ mm^{-3} \pm 50\%$$

$$b_{j21} = -1{,}7 * 10^{-5} \ mm^{-2} \pm 50\%$$

$$c_{j21} = -8 * 10^{-3} \ mm^{-1} \pm 50\%$$

s'appliquent.

**20.** Série selon la revendication 19, caractérisée en ce que pour les coefficients des deux coupes principales :

$$a_{121} = 2{,}35 * 10^{-8} \ mm^{-3} \pm 50\%$$

$$b_{j21} = -1{,}7 * 10^{-5} \ mm^{-2} \pm 50\%$$

$$c_{j21} = -8 * 10^{-3} \ mm^{-1} \pm 50\%$$

$$a_{122} = 1{,}73 * 10^{-5} \ mm^{-2} \pm 50\%$$

$$b_{122} = -3{,}22 * 10^{-2} \ mm^{-1} \pm 50\%$$

$$c_{122} = -2{,}27 \pm 50\%$$

$$a_{222} = -2{,}76 * 10^{-5} \ mm^{-2} \pm 50\%$$

$$b_{222} = -1{,}29 * 10^{-3} \ mm^{-1} \pm 50\%$$

$$c_{222} = 0,172 \pm 50\%$$

s'appliquent.

**FIG. 1a**

Flaecheneigenschaften    bez. n= 1.604    Astigmatismus (dpt)

Baslskurve 4

Sph =  -2.50    Add = 2.00    n = 1.604   drpr = 0.00

.50    1.50
1.00    2.00

FIG. 1b

**FIG. 1c**

FIG. 2a

FIG. 2b

FIG. 2c

FIG. 3a

Flaecheneigenschaften    bez. n= 1.604        Astigmatismus (dpt)

Basiskurve 6,5
Sph =    3.25    Add = 2.00    n = 1.604  drpr = 1.25

.50     1.50
1.00     2.00

FIG. 3b

Flaecheneigenschaften   bez. n= 1.604      Astigmatismus [dpt]

Basiskurve 6,5

Sph = 3.25    Add = 3.00    n = 1.604   drpr = 2.00

.50      1.50     2.50
1.00     2.00     3.00

FIG. 3c

FIG. 4a

FIG. 4b

FIG. 4c

FIG. 5

Fig. 6a

36

**Fig. 6b**

Fig. 6c

Fig. 6d

Fig. 7a

Fig. 7b